# EUROPÄISCHE PATENTSCHRIFT

(11) **EP 1 132 291 B1**
(45) Veröffentlichungstag und Bekanntmachung des Hinweises auf die Patenterteilung: **03.11.2004**
(21) Anmeldenummer: 01102444.5
(22) Anmeldetag: 03.02.2001
(51) Int. Cl.: B64D 11/06, B64D 11/00

(54) **Sitzreihe mit Vorrichtung zur Orientierung in einer Passagierkabine eines Flugzeuges**
Seat row with aircraft cabin orientation device
Rangée de sièges avec dispositif pour s'orienter dans la cabine d'un aéronef

(30) Priorität: 09.03.2000 DE 10011431; 24.10.2000 DE 10052594
(43) Veröffentlichungstag der Anmeldung: 12.09.2001
(73) Patentinhaber: Airbus Deutschland GmbH, 21129 Hamburg (DE)
(72) Erfinder: Romca, Jens, 54106 Kiel (DE); Müller, Jochen, 54106 Kiel (DE); Schumacher, Markus, 21614 Buxtehude (DE)
(74) Vertreter: Hansmann, Dierk, Dipl.-Ing.

(56) Entgegenhaltungen:
- CH-A- 207 330
- DE-C- 19 641 565
- US-A- 2 635 681

## Beschreibung

Die Erfindung betrifft eine Sitzreihe mit Vorrichtung zur Orientierung in einer Passagierkabine eines Flugzeuges, wobei Anzeigeelemente vorgesehen sind, die die Sitzreihen und die Sitzplatznummer einer Sitzkonfiguration in einem Flugzeug angeben.

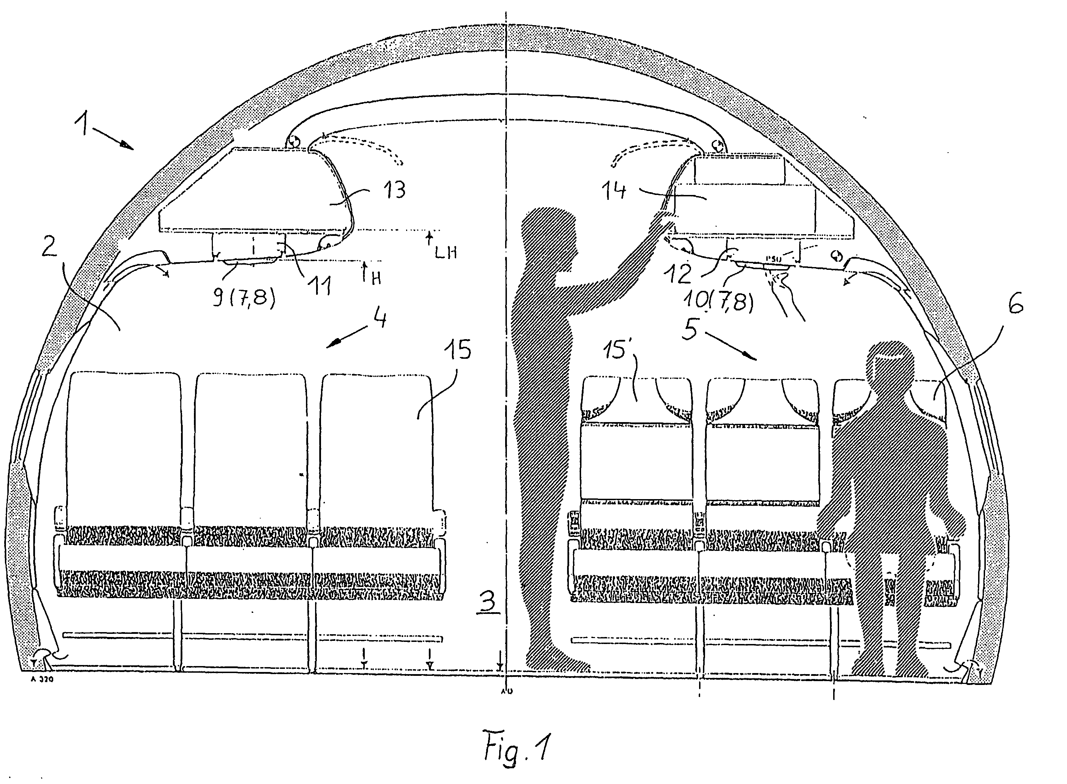

Derartige Vorrichtungen zur Orientierung sind in gegenwärtigen Flugzeugen, beispielsweise in Flugzeugen vom Typ Airbus A320 unterhalb der Gepäckablagen in einen Versorgungskanal - Passenger Service Unit (PSU)-Kanal genannt - integriert. Im Versorgungskanal sind stabförmige Anzeigeelemente quer zur Flugrichtung, d.h. parallel zum Sitzreihenverlauf angeordnet.
Aus ergonomischen Gründen ist die Anbringungshöhe des PSU-Kanals auf ein Maß beschränkt, welches ein sitzender Passagier bequem erreichen kann. Ebenso ist bei der Anordnung der festen, nicht absenkbaren Gepäckablagen in der Flugzeugpassagierkabine aufgrund ergonomischer Anforderungen eine bestimmte Höhe der Ladekante vorgeschrieben, die bei ungefähr 1,67 m liegt. Wie aus einer Querschnittsdarstellung eines Flugzeuges vom Typ A320 (Fig. 1 der Zeichnung) ersichtlich ist, ist somit das stabförmige Anzeigeelement durch die konvexe Konturkrümmung des unteren Bereichs der Gepäckablage auch noch deutlich tiefer als die Ladekante angeordnet. Aus der Blickrichtung einer stehenden Person in Normalgröße ist somit das Anzeigeelement nur schwer oder nur in gebeugter Haltung einsehbar. Demzufolge ist es beim Boarding der Passagiere nachteilig, wenn Fluggäste auf der Suche nach dem ihnen zugewiesenen Platz schwer die richtige Sitzreihe und den richtigen Sitzplatz finden. Die für das Einsteigen in ein Flugzeug benötigte Zeit verlängert sich dadurch und wirkt sich negativ auf die Bodenzeit eines Flugzeuges - eine maßgebliche Größe für die Wirtschaftlichkeit eines Flugzeuges - aus.

DE-C-196 41 565 zeigt eine Einrichtung zum Nummerieren eines Stuhles oder einer Stuhlreihe, welche ein magnetisch an einem Element des Stuhles festlegbares Schild aufweist. Mit der Möglichkeit einer einfachen und zeitsparenden Änderung der Nummerierung ist es insbesondere für variable Bestuhlungen vorteilhaft, ein derartig leicht austauschbares Schild anzuwenden. Es ist hier jedoch nichts offenbart über eine Kombination der Reihen- und Sitzplatzkennzeichnung zur Kennzeichnung einer Sitzreihe von Fluggastsitzen.

Aus CH-A-207 330 ist ein Nummerschild zur abnehmbaren Befestigung an Stuhllehnen bekannt. Dieses Nummemschild soll als federnde Klammer ausgebildet sein und somit das Aufsetzen und Entfemen des Schildes an Stuhllehnen einfach und unaufwändig ermöglichen. Auch hier ist über eine Kombination von Reihen- und Sitzplatzkennzeichnungen einer Sitzreihe in einer Flugzeugpassagierkabine nichts offenbart. Ersichtlich ist lediglich die mittige Anordnung eines Kennzeichnungsschildes an einer Rückenlehne.

Aus US-A-2 635 681 ist eine Sitzgruppe gezeigt, die am Seitenteil im unteren Bereich ein Beleuchtungselement aufweist, welches nach unten abstrahlt und somit beispielsweise eine Fluchtwegbeleuchtung realisiert. Gleichzeitig kann dieses Element als Kennzeichnungsschild genutzt werden, wenn die Abdeckung entsprechende Ausformungen aufweist, um ein Schriftzeichen oder eine Zahl zu bilden. Diese Kennzeichnung ist jedoch nur gut erkennbar mit einer entsprechenden Hintergrundbeleuchtung.

Der Erfindung liegt daher die Aufgabe zugrunde, eine Sitzreihe mit Vorrichtung zur Orientierung in einer Passagierkabine eines Flugzeuges derartig auszubilden, das die aus dem Stand der Technik bekannten Nachteile beseitigt werden und insbesondere die Wirtschaftlichkeit eines Flugzeuges verbessert wird durch Verkürzung der Bodenzeit eines Flugzeuges.

Diese Aufgabe wird bei einer gattungsgemäßen Vorrichtung mit den im Patentanspruch 1 genannten Maßnahmen gelöst.

Dabei ist insbesondere von Vorteil, dass die Einsteigezeit der Fluggäste in das Flugzeug verkürzt werden kann und die Kennzeichnung der Sitzreihe und der Sitzposition so angebracht ist, dass sie für einen in dem Gang stehenden oder vorübergehenden Fluggast ohne Abweichung von der normalen Körperhaltung und ohne aufwendiges Suchen leicht ersichtlich ist. Die Sitzkennzeichnung ist augenfällig und leicht lesbar gestaltet.

Weiterbildungen und vorteilhafte Ausgestaltungen sind in den Unteransprüchen 2 bis 9 angegeben sowie in der nachfolgenden Figurenbeschreibung dargestellt.

In der Zeichnung sind Ausführungsbeispiele der Erfindung dargestellt, die nachstehend anhand der Figuren 1 bis 6 näher beschrieben werden. In den Figuren sind gleiche Bauteile mit gleichen Bezugszeichen versehen.

Es zeigt
- Fig. 1: einen Querschnitt durch einen Flugzeugrumpf mit nach dem Stand der Technik bekannten Anzeigeelementen zur Sitzreihenkennzeichnung,
- Fig. 2: eine erfindungsgemäße Vorrichtung zur Orientierung mit Anzeigeelementen für Sitzreihen und Sitzplätze,
- Fig. 3: eine Detaildarstellung der Vorrichtung gemäß Fig. 2 im Bereich einer Gangsitzseite mit Blickrichtung von hinten,
- Fig. 4: eine Detaildarstellung einer Einzelsitzkennzeichnung,
- Fig. 5: einen Passagiersitz in der Ansicht von hinten und
- Fig. 6: einen Passagiersitz im Kopfbereich mit Anzeigeelementen.

In Fig. 1 ist ein Querschnitt durch einen Flugzeugrumpf 1 eines Flugzeuges vom Typ A320 mit einer für den Passagiertransport ausgelegten Passagierkabine 2 dargestellt. Wie in dem Querschnitt durch die Passagierkabine 2 ersichtlich ist, ist ein in Flugzeuglängsrichtung verlaufender Gang 3 vorgesehen und Sitzgruppen 4 und 5 sind jeweils in Reihe angeordnet und bilden eine Sitzreihe 6. In Flugzeuglängsrichtung ist eine Vielzahl derartiger Sitzreihen 6 vorgesehen. Zur Orientierung für einen Fluggast, der beim Einstieg in das Flugzeug seinen vorbestimmten Sitzplatz einnehmen möchte, sind jeder Sitzreihe 6 mit den Sitzgruppen 4 und 5 eine Sitzreihennummerierung 7 und eine Sitzplatzkennung 8 zugeordnet. In aus dem Stand der Technik bekannter Weise sind die Sitzreihennummerierung 7 und je Reihe jedem Sitz zugeordnet eine Sitzplatzkennung 8 mit Kennzeichen A bis F oberhalb der Sitzgruppen 4 und 5 in einem stabförmigen, quer zur Flugrichtung und parallel zu den Sitzreihen angeordneten Anzeigeelement 9 (für Sitzgruppe 4) und 10 (für Sitzgruppe 5) vorgesehen. Die Anzeigeelemente 9 und 10 sind in einem entsprechenden (linken oder rechten ) Versorgungskanal 11 und 12 integriert. Diese Versorgungskanäle 11 und 12 unterhalb von Gepäckablagen 13 und 14 sind in ihrer Anordnung zunächst so gestaltet, dass sie im Zugriffsbereich eines sitzenden Passagiers liegen. Aufgrund der vorgegebenen Ladekantenhöhe LH der Gepäckablagen 13 und 14 und der noch darunter liegenden Höhe H des Anzeigenelementes 9 oder 10 sind diese für einen im Gang befindlichen, stehenden oder gehenden Passagier schlecht einsehbar und hindern so ein zügiges Boarding der Passagiere.

Zur Lösung dieses Problems wird vorgeschlagen, dass eine gut sichtbare Kennzeichnung der Sitzreihennummer und der Sitzplatznummer am Objekt selbst, d.h. am Passagiersitz bzw. an den Passagiersitzgruppen 4 und 5 vorgenommen wird. Dabei ist zu berücksichtigen, dass die räumliche Orientierung eines Menschen bei der Suche eines Objektes zunächst das Erreichen einer ungefähren Position anstrebt und von dieser ausgehend dann die genauere Position ansteuert. Dies gilt erst recht für unübersichtliche Situationen, in denen das gesuchte Ziel am Ausgangspunkt noch nicht direkt sichtbar ist, was beim Boarding aufgrund der Sichtbehinderung durch die übrigen Passagiere die Regel ist.
Vor Erreichen des genauen Sitzplatzes findet mit der Suche nach der eigenen Sitzreihe zuerst eine gröbere Orientierung statt. Der Suchende wird am Vergleich zwischen gerade abgelesener Nummer auf der Bordkarte und der gesuchten Reihe feststellen, ob er noch weit vom Ziel entfernt ist oder sich unmittelbar davor befindet. Wenn die Sitzreihe gefunden ist, wird er die zu erreichende Sitzplatznummer suchen. Die Kennzeichnung der Sitzreihe ist daher so angebracht, dass sie für den in dem Gang vorübergehenden Fluggast ohne Abweichung von der normalen Körperhaltung auf Anhieb augenfällig und lesbar ist. Folglich kommt hierfür die gangzugewandte Seite der Gangsitze 15 bzw. 15' der Sitzgruppen 4 und 5 in Frage.

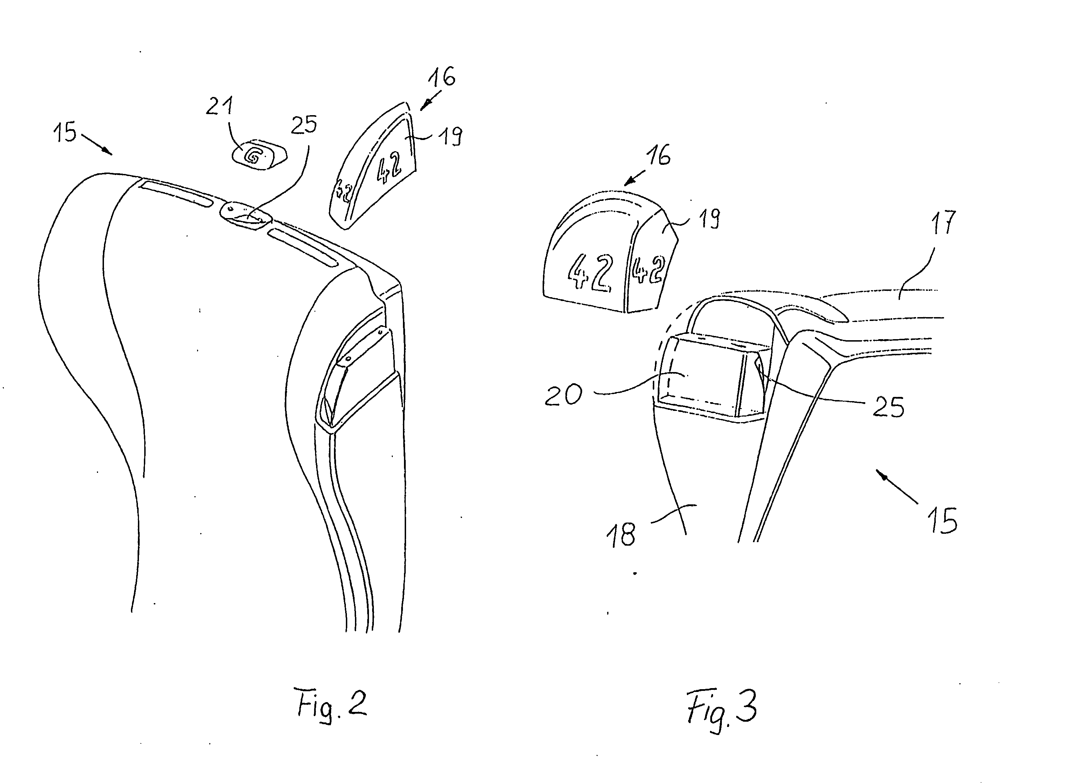

Der Gangsitz 15 bzw. 15' der Sitzgruppe 4 oder 5 ist als Einzelheit in Fig. 2 dargestellt. Ein derartiger Gangsitz 15 weist ein Kennzeichenelement 16 für eine Sitzreihennummer auf, welches vorzugsweise in der größtmöglichen Anbringungshöhe im Eckbereich zwischen Sitzlehnenoberkante 17 und Sitzlehnenflanke 18 angeordnet ist. Damit befindet sich die Sitzlehnenoberkante 17 des Gangsitzes 15 üblicherweise mit 1,10 - 1,15 m über dem Fußboden deutlich unter dem Augpunkt stehender erwachsener Personen und ist von einem im Gang 3 befindlichen Passagier mit normaler Kopfhaltung leicht ersichtlich.
Das Kennzeichenelement 16 für die Sitzreihennummer ist vorzugsweise als eine Eckkappe 19 ausgebildet und weist auf der Eckkappe die Sitzreihennummer mindestens zweimal auf, um die Erkennbarkeit nicht nur in einer Boardingrichtung, sondern aus allen Richtungen zu gewährleisten. In Fig. 2 und im Detail in Fig. 3 ist eine dreifache Nummerierung, nämlich nach vorn, zur Seite sowie nach hinten vorgesehen. In einer nicht gezeigten Ausführungsform kann die Sitzreihennummer zweifach auf der Eckkappe 19 vorgesehen sein, schräg nach vorne und schräg nach hinten zeigend. Bei einer diagonalen Blickrichtung der Nummerierung kann die dritte Sitzreihennummer überflüssig sein, da die Lesbarkeit auch unmittelbar von der Seite hinreichend gewährleistet ist.
In Fig. 3 ist im Detail die Eckkappe 19 in einer Blickrichtung auf den hinteren Teil des Gangsitzes 15 ersichtlich. Die Eckkappe 19 ist im Eckbereich zwischen Sitzlehnenoberkante 17 und Sitzlehnenflanke 18 an einem am Gangsitz 15 vorgesehenen Halteelement 20 zu befestigen. Zwischen Eckkappe 19 und Halteelement 20 kann beispielsweise eine Steckverbindung mit Einrastelementen vorgesehen sein. Vorzugsweise ist eine wieder lösbare Verbindung zwischen Eckkappe 19 und Halteelement 20 zu wählen, da bei einer Änderung des Sitzlayouts in der Passagierkabine 2 sich auch die Sitzreihennummern ändern können, ein Austausch eines Sitzes möglich sein soll oder auch die Eckkappen 19 als Gestaltungselement in der Passagierkabine 2 farblich oder in der Form verändert und ausgetauscht werden. Schließlich ist auch bei einer Beschädigung der Eckkappe 19 ein leichterer Austausch möglich. Aus Fig. 2 ist weiterhin zu entnehmen, dass am entsprechenden Sitz einer Sitzgruppe 4 oder 5 ein Sitzplatzkennungselement 21 angeordnet ist. Das Sitzplatzkennungselement 21 ist im Bereich der Sitzlehnenoberkante 17, vorzugsweise an mittiger Position angeordnet und gibt mit üblicherweise einer Buchstabenkennung die Position des Sitzes innerhalb der Sitzreihe an. Die Markierung der genauen Position des Sitzes folgt ebenfalls dem Ziel, dem Fluggast mit einer Kennzeichnung direkt am Sitz ein schnelles Auffinden "seines" Sitzplatzes zu errnöglichen und damit das Einsteigen der Passagiere zu beschleunigen.

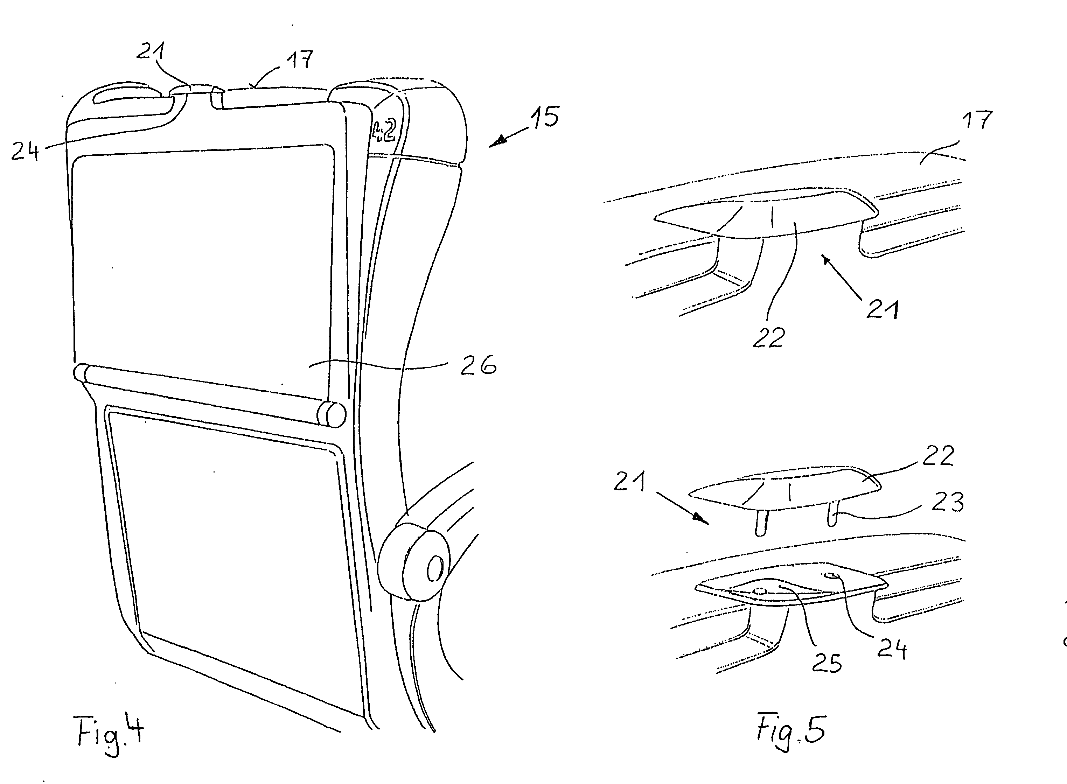

In Fig. 4 ist in einer Detaildarstellung das Sitzplatzkennzeichen 21 dargestellt. Im wesentlichen ist eine Kennzeichenkappe 22 vorgesehen, die mit Einraststiften 23 in dafür vorgesehene Halterungen 24 am entsprechenden Sitz eingreift. Die Positionskennung - üblicherweise in Buchstabenform A, B, C ... - ist vorzugsweise an bzw. in die Kennzeichenkappe 22 aufgedruckt oder eingebracht. Klarsichtige Kennzeichenkappen 22 sind notwendig, wenn das entsprechende Kennzeichen als separates Teil eingelegt wird.

Eine weitere Ausführungsform einer Vorrichtung zur Orientierung nutzt den Umstand, dass in heutigen Flugzeugpassagierkabinen jedem Flugzeugpassagiersitz elektrische Energie zur Verfügung stehen kann. So ist es möglich, Anzeigeelemente mittels einer Elektrolumineszenzfolie 25 zu beleuchten. Eine Konkretisierung der Reihen- bzw. Positionskennung kann dann durch eine entsprechende Maskengestaltung an der Eckkappe 19 oder der Kennzeichenkappe 22 erfolgen. Nach dem Boardingvorgang kann die Beleuchtung der Sitz(reihen)kennzeichnung 16 und 21 wieder verlöschen.
Die beschriebene Ausführungsart einer beleuchteten Sitzkennzeichnung kann sowohl herkömmliche Hinterleuchtungen z.B. durch LEDs einschließen, als auch das Aufdrucken der Ziffer mittels einer elektrolumineszenten Druckfarbe, an die Spannung angelegt wird.

Auch könnte die beschriebene, auswechselbare, selbsterklärende und beleuchtete Sitzreihenkennzeichnung 16 neben dem Boarden Notevakuierungsvorgänge unterstützen. Neben der Fluchtwegbeleuchtung eingesetzt, kann die Sitzreihenkennzeichnung bewirken, dass in einer verdunkelten Umgebung nicht nur der Verlauf der Fluchtwege, sondern auch deren durch die Sitze definierte Kontur erkennbar wird. Dies verhindert, dass Passagiere während der Notevakuierung an den Sitzen hängen bleiben und den Evakuierungsfluss in gefährlicher Weise behindern.

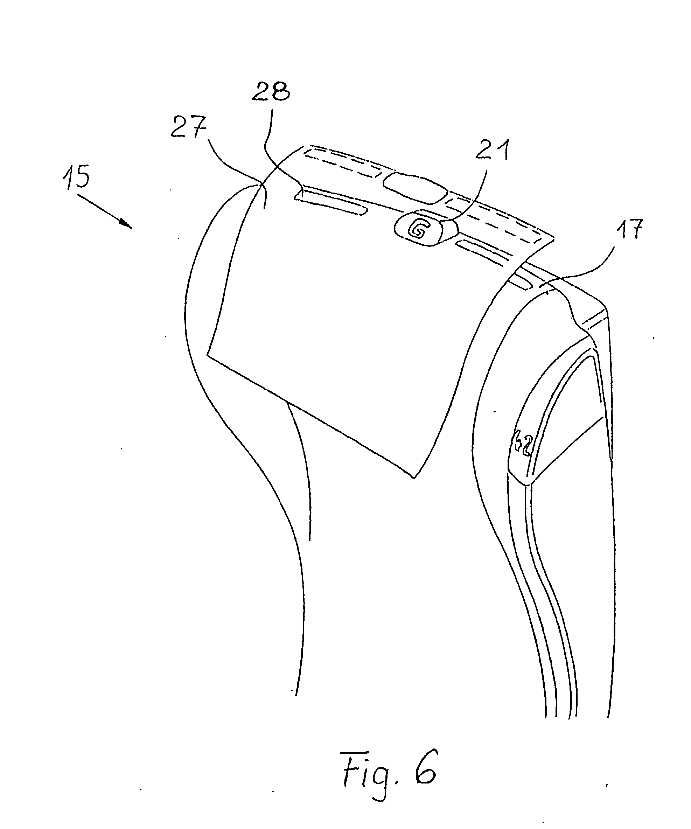

In der Fig. 5 ist in einer Ansicht eines Gangsitzes 15 von hinten ersichtlich, dass ein an der Sitzlehnenoberkante 17 angeordnetes Sitzplatzkennungselement 21 auch die Funktion einer Befestigungsrastung für einen Passagiertisch 26 an der Sitzrückseite übernehmen kann. Entsprechende Rastelemente können im Bereich der Halterungen 24 vorgesehen sein.

In Fig. 6 ist ein Passagiersitz 15 mit einer weiteren Funktion des Sitzplatzkennungselements 21 dargestellt. Im Kopfbereich der Rückenlehne ist aus hygienischen Gründen ein Auswechseln von Kopfbezügen bei vielen Airlines üblich und so stellt das Auswechseln aller Kopfbezüge einen nicht unerheblichen Zeitfaktor für die Kabinenreinigung und somit für die Bodenzeit eines Flugzeuges dar. Statt des Überziehens eines Bezuges über das gesamte Kopfpolster wird in der vorgeschlagenen Lösung eine entsprechend formatierte Kopfpolsterschutzdecke 27 über das Kopfpolster gelegt. Sie ist dann mit ihrem "Knopfloch" am Sitzplatzkennungselement 21 befestigt. Daneben können im Bereich der Sitzlehnenoberkante 17 oder entlang des Randbereichs der Kopfpolsterschutzdecke 27 angeordnete Streifen von Klettverschlüssen 28 eine gleichmäßige Halterung der Kopfpolsterschutzdecke 27 bewirken. Der Vorgang des Auf- und des Abziehens der Kopfpolsterschutzdecke 27 ist gegenüber dem Auf- und des Abziehen eines nach dem Stand der Technik üblichen Spanntuchs in einer kürzeren Zeit zu bewältigen.

### Bezugszeichen

- 1: - Flugzeugrumpf
- 2: - Passagierkabine
- 3: - Gang
- 4, 5: - Sitzgruppen
- 6: - Sitzreihe
- 7: - Sitzreihennummerierung
- 8: - Sitzplatzkennung
- 9, 10: - Anzeigeelement
- 11, 12: - Versorgungskanäle
- 13, 14: - Gepäckablagen
- 15: - Gangsitz
- 16: - Anzeigeteil für Sitzreihennummer
- 17: - Sitzlehnenoberkante
- 18: - Sitzlehnenflanke
- 19: - Eckkappe
- 20: - Halteelement
- 21: - Sitzplatzkennungselement
- 22: - Kennzeichenkappe
- 23: - Einraststifte
- 24: - Halterungen
- 25: - Elektrolumineszenzfolie
- 26: - Passagiertisch
- 27: - Kopfpolsterschutzdecke
- 28: - Klettverschlussstreifen

## Patentansprüche

1. Sitzreihe mit mindestens einem gangseitigen Fluggastsitz und mit einer Vorrichtung zur Orientierung in einer Passagierkabine, wobei Anzeigeelemente vorgesehen sind, die die Sitzreihen und die Sitzplatznummer einer Sitzkonfiguration in einem Flugzeug angeben, wobei die Anzeigeelemente (16, 21) an Fluggastsitzen (15) vorgesehen sind, **dadurch gekennzeichnet, dass** die Anzeigeelemente (16, 21) entsprechend der Reihe (6) des Sitzes bzw. der Position (A - F) innerhalb der Sitzreihe (6) ausgestaltet und an für den Passagier sichtbarer Stelle angeordnet sind sowie mindestens eins der Anzeigeelemente (21) als Sitzplatzkennungselement ausgebildet ist und mindestens ein weiteres der Anzeigeelemente (16) für eine Sitzreihennummerierung am gangseitigen Fluggastsitz (15) an der zum Gang (3) gerichteten Sitzlehnenflanke (18) vorgesehen ist.

2. Sitzreihe nach Anspruch 1, **dadurch gekennzeichnet, dass** das Anzeigeelement (16) mit einer Sitzreihennummerierung am gangseitigen Fluggastsitz (15) im Eckbereich von Sitzlehnenoberkante (17) und Sitzlehnenflanke (18) vorgesehen ist.

3. Sitzreihe nach einem der Ansprüche 1 oder 2, **dadurch gekennzeichnet, dass** das Anzeigeelement (16) für eine Sitzreihennummerierung als eine Eckkappe (19) ausgebildet ist, die an einem am Gangsitz vorgesehen Halteelement (20) lösbar befestigt ist.

4. Sitzreihe nach einem der Ansprüche 1 bis 3, **dadurch gekennzeichnet, dass** im oberen Bereich der Rückenlehne des Fluggastsitzes (15) an der Sitzlehnenoberkante (17) das Sitzplatzkennungselement (21) angeordnet ist.

5. Sitzreihe nach Anspruch 4, **dadurch gekennzeichnet, dass** das Sitzplatzkennungselement (21) eine Kennzeichenkappe (22) aufweist, die in einer an der Sitzlehnenoberkante (17) angeordneten Halterung (24) einrastet.

6. Sitzreihe nach einem der Ansprüche 1 bis 5, **dadurch gekennzeichnet, dass** die Anzeigeelemente (16, 21) beleuchtet ausgeführt sind.

7. Sitzreihe nach einem der Ansprüche 1 bis 6, **dadurch gekennzeichnet, dass** das Anzeigeelement (16) für die Sitzreihennummerierung zur Fluchtwegbeleuchtung verwendbar ist.

8. Sitzreihe nach einem der Ansprüche 5 bis 7, **dadurch gekennzeichnet, dass** das Sitzplatzkennungselement (21) mit der Kennzeichenkappe (22) zur Aufnahme einer Kopfpolsterschutzdecke (27) verwendbar ist.

9. Sitzreihe nach einem der Ansprüche 5 bis 8, **dadurch gekennzeichnet, dass** an der Halterung (24) der Kennzeichenkappe (22) Rastmittel zur Aufnahme eines an der Sitzrückseite hochgeklappten Passagiertisches (26) vorgesehen sind.

## Claims

1. Row of seats with at least one aircraft passenger aisle seat and with an orientation device in a passenger cabin, display elements being provided which indicate the rows of seats and the seat numbers of a seating arrangement in an aircraft, the display elements (16, 21) being provided on aircraft passenger seats (15), **characterised in that** the display elements (16, 21) are configured corresponding to the row (6) of the seat and the position (A-F) within the row of seats (6) and arranged in a position visible to the passenger and at least one of the display elements (21) is constructed as a seat identification element and at least one further display element (16) is provided for seat row numbering on the aircraft passenger aisle seat (15) on the seat back flank (18) facing the aisle (3).

2. Row of seats according to claim 1, **characterised in that** the display element (16) is provided with seat row numbering on the aircraft passenger aisle seat (15) in the corner region of the seat back upper edge (17) and seat back flank (18).

3. Row of seats according to any of claims 1 or 2, **characterised in that** the display element (16) for seat row numbering is constructed as a corner cap (19) which is releasably fastened to a support element (20) provided on the aisle seat.

4. Row of seats according to any of claims 1 to 3, **characterised in that** in the upper region of the backrest of the aircraft passenger seat (15) the seat identification element (21) is arranged on the seat back upper edge (17).

5. Row of seats according to claim 4, **characterised in that** the seat identification element (21) comprises an identification cap (22), which clips into a holder (24) arranged on the seat back upper edge (17).

6. Row of seats according to any of claims 1 to 5, **characterised in that** the display elements (16, 21) are designed to be illuminated.

7. Row of seats according to any of claims 1 to 6, **characterised in that** the display element (16) for the seat row numbering can be used for emergency escape lighting.

8. Row of seats according to any of claims 5 to 7, **characterised in that** the seat identification element (21) can be used with the identification cap (22) to receive a head cushion protective cover (27).

9. Row of seats according to any of claims 5 to 8, **characterised in that** latching means are provided on the holder (24) of the identification cap (22) to receive a folded up passenger tray table (26) on the seat back.

## Revendications

1. Rangée de sièges comprenant au moins un siège passager côté couloir et un dispositif pour s'orienter dans une cabine de passagers, dans laquelle sont prévus des éléments indicateurs qui indiquent les rangées de sièges et les numéros de places d'une configuration de sièges dans un avion, les éléments indicateurs (16, 21) étant prévus sur les sièges de passagers (15), **caractérisée en ce que** les éléments indicateurs (16, 21) sont aménagés en fonction de la rangée (6) du siège ou de la position (A-F) au sein de la rangée de sièges (6) et disposés à un emplacement visible pour le passager et, de même, au moins un des éléments indicateurs (21) se présente sous la forme d'un élément indicatif de la place du siège et au moins un autre des éléments indicateurs (16) destiné à une numérotation de la rangée de sièges sur le siège passager côté couloir (15) est prévu sur le flanc (18) du dossier de siège tourné vers le couloir (3).

2. Rangée de sièges selon la revendication 1, **caractérisée en ce que** l'élément indicateur (16) est pourvu d'une numérotation de rangée de sièges sur le siège passager côté couloir (15) dans la zone de coin du bord supérieur (17) du dossier de siège et du flanc (18) du dossier de siège.

3. Rangée de sièges selon l'une quelconque des revendications 1 et 2, **caractérisée en ce que** l'élément indicateur (16) pour une numérotation de la rangée de sièges se présente sous la forme d'une coiffe de coin (19) qui est fixée de manière enlevable sur un élément de retenue (20) prévu sur le siège de couloir.

4. Rangée de sièges selon l'une quelconque des revendications 1 à 3, **caractérisée en ce que** l'élément (21) indicatif de la place du siège est disposé dans la zone supérieure du dossier arrière du siège passager (15) sur le bord supérieur (17) du dossier de siège.

5. Rangée de sièges selon la revendication 4, **caractérisée en ce que** l'élément (21) indicatif de la place du siège présente une coiffe caractéristique (22) qui s'encliquette dans une fixation (24) agencée sur le bord supérieur (17) du dossier de siège.

6. Rangée de sièges selon l'une quelconque des revendications 1 à 5, **caractérisée en ce que** les éléments indicateurs (16, 21) sont éclairés.

7. Rangée de sièges selon l'une quelconque des revendications 1 à 6, **caractérisée en ce que** l'élément indicateur (16) pour la numérotation de la rangée de sièges peut être utilisé pour éclairer les issues de secours.

8. Rangée de sièges selon l'une quelconque des revendications 5 à 7, **caractérisée en ce que** l'élément (21) indicatif de la place du siège avec la coiffe caractéristique (22) peut être utilisé pour recevoir une feuille de protection (27) d'appuie-tête.

9. Rangée de sièges selon l'une quelconque des revendications 5 à 8, **caractérisée en ce que** sont prévus, sur la fixation (24) de la coiffe caractéristique (22), des moyens d'encliquetage pour recevoir une table de passager (26) relevable sur la face arrière du siège.
